# FASCICULE DE BREVET EUROPEEN

(11) **EP 1 908 923 B1**
(45) Date de publication et mention de la délivrance du brevet: **27.01.2010**
(21) Numéro de dépôt: 07116774.6
(22) Date de dépôt: 19.09.2007
(51) Int. Cl.: F01D 9/04, F04D 29/54, F04D 29/64

(54) **Dispositif de fixation d'une aube fixe dans un carter annulaire de turbomachine, turboréacteur incorporant le dispositif et procédé de montage de l'aube fixe**
Vorrichtung zur Befestigung einer Leitschaufel in einem ringförmigen Gehäuse einer Strömungsmaschine, Turbinentriebwerk mit einer solchen Vorrichtung, und Verfahren zur Montage der Leitschaufel
Device for fixing a stator vane in an annular casing of a turbomachine, jet engine including the device and method of installing the stator vane

(30) Priorité: 26.09.2006 FR 0653952
(43) Date de publication de la demande: 09.04.2008
(73) Titulaire: SNECMA, 75015 Paris (FR)
(72) Inventeur: Belmonte, Olivier, 77176, Savigny le Temple (FR)
(74) Mandataire: David, Daniel

(56) Documents cités:
- EP-A- 1 219 785
- EP-A1- 0 953 729
- EP-A2- 1 167 693
- FR-A1- 2 832 179
- US-A1- 2004 062 652

## Description

La présente invention concerne le domaine des turbomachines, en particulier les turboréacteurs à double flux.

Un turboréacteur à double flux pour la propulsion d'avions de transport comprend une soufflante généralement amont délivrant un flux d'air annulaire avec une partie annulaire centrale, primaire, qui alimente le moteur entraînant la soufflante et une partie annulaire extérieure, secondaire, qui est éjectée dans l'atmosphère tout en fournissant une fraction importante de la poussée. La soufflante est contenue dans un carter de soufflante délimitant extérieurement le flux secondaire. Un carter de flux primaire sépare le flux primaire du flux secondaire au niveau d'un bec de séparation.

La présente invention concerne la fixation et le montage d'ailettes fixes ou aubes de redresseur situées en aval de la soufflante.

Un exemple de la fixation d'une aube fixe est divulgué dans le document US 2004/0062652.

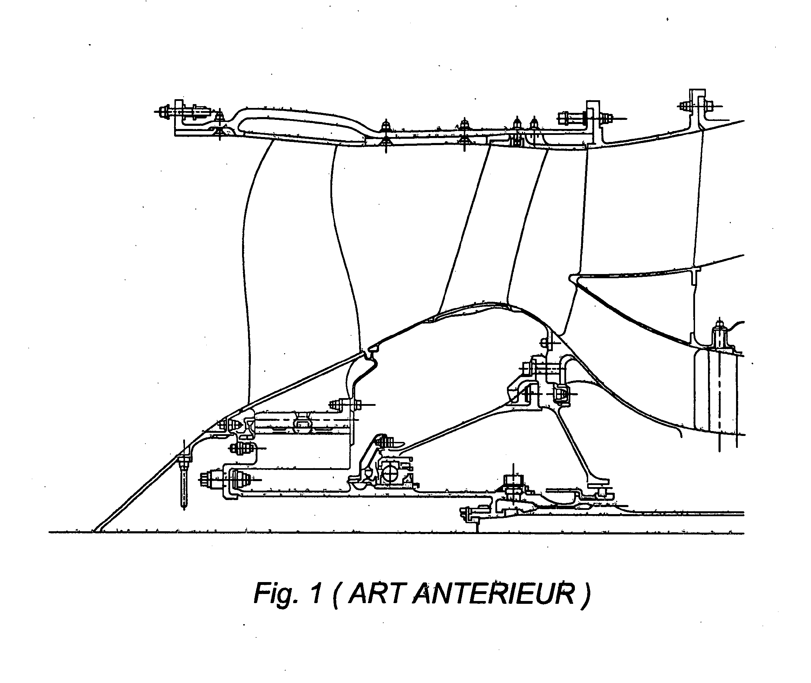

Le montage des aubes de redresseur dans un turboréacteur est une technique maîtrisée pour des moteurs de taille moyenne, tels que les moteurs du type CFM. Cette technique de montage est traditionnellement désignée comme un montage du type « encastré/appuyé ». Elle est utilisée pour monter les aubes de redresseur, par exemple, dans le flux secondaire, entre le carter de soufflante et le carter de flux primaire pour redresser le flux secondaire dans l'axe du moteur tel que représenté sur la figure 1.

Dans le cadre d'une telle application, l'aube fixe comprend une tête formée d'une plate-forme avec deux bords, l'un formant un bord amont et l'autre formant un bord aval, une pale et un pied. Le carter de soufflante comprend une gorge circonférentielle, ménagée dans sa paroi interne, avec un flanc amont et un flanc aval, la tête de l'aube étant retenue par engagement de la plateforme dans la gorge. La plateforme est maintenue dans la gorge au moyen de deux vis de fixation qui sont vissées dans la plateforme, respectivement de chaque côté des flancs de la pale, comme représenté sur la figure 1. A l'autre extrémité de la pale, le pied de l'aube est retenu par engagement dans une ouverture ménagée dans le carter de flux primaire.

Pour les moteurs de taille moyenne, la dimension radiale du moteur est suffisante pour qu'un technicien puisse manipuler les aubes entre le carter de flux primaire et le carter de soufflante, c'est-à-dire les pivoter et les translater sans risque de heurts avec le carter ou avec une aube préalablement installée. Les aubes sont accessibles « par l'arrière », c'est-à-dire en aval des aubes dans le flux secondaire, ce qui facilite les opérations d'entretien et de remplacement des aubes usées.

Par comparaison avec un moteur de taille moyenne, pour un nombre d'aubes donné, la densité linéaire des aubes à la périphérie du carter de soufflante est plus élevée pour un moteur de petite taille, la densité angulaire demeurant la même. Ceci a plusieurs conséquences au niveau de la fixation des aubes fixes.

Les plateformes, dont la dimension périphérique est importante pour accueillir les vis de fixation, sont proches les unes des autres à la périphérie du carter. L'insertion des aubes dans le moteur est alors difficile, en particulier lors de l'engagement de l'aube dans la gorge du carter de soufflante, les déplacements transversaux étant limités. Les vis de fixation de la plateforme, disposés respectivement de chaque côté des flancs de la pale, sont engagées entre deux pales adjacentes, rendant leur accès difficile au moyen des appareils de vissage.

Le but de l'invention est de pallier ces inconvénients et de proposer un dispositif de fixation et un procédé de montage des aubes fixes dans un carter annulaire permettant une insertion rapide et un maintien simple des aubes dans le carter.

A cet effet, la demanderesse propose un dispositif de fixation d'une aube fixe de turbomachine dans un carter annulaire de la turbomachine, l'aube comprenant une tête formée d'une plateforme avec deux bords, l'un formant un bord amont et l'autre formant un bord aval, une pale et un pied, le carter annulaire comprenant une gorge circonférentielle ménagée dans sa paroi interne avec un flanc amont et un flanc aval, l'aube étant retenue par engagement de la plateforme dans la gorge, le bord amont contre le flanc amont et le bord aval contre le flanc aval de la gorge,le flanc aval de la gorge étant en forme de rainure d'ouverture axiale vers l'amont, le bord aval de la plateforme étant engagé dans ledit flanc aval et un moyen de fixation étant rapporté pour maintenir la plateforme dans la gorge à l'amont, caractérisé par le fait que l'aube comporte une portion de plateforme entre la pale et le bord amont percée d'une ouverture traversante agencée pour recevoir ledit moyen de fixation.

Avantageusement, le flanc aval de la gorge ne nécessite pas de moyen de fixation rapporté, facilitant ainsi l'insertion et le maintien de l'aube dans le carter. Un moyen de fixation est uniquement rapporté en amont de la pale ce qui permet de fixer les aubes par l'avant du moteur et non de chaque côté des pales. Les moyens de fixations sont alors aisément accessibles par des outils de fixation permettant de rendre plus rapide la fixation de la plateforme dans la gorge.

De préférence, le moyen de fixation est constitué d'une vis ou de deux vis.

Avantageusement, une ou deux vis sont engagées à proximité du bord amont de la plateforme pour maintenir cette dernière dans la gorge. L'accessibilité des vis en amont permet une manipulation aisée des appareils de vissage.

De préférence, une couche en matériau élastomère est disposée entre le bord aval de la plateforme et le fond de ladite rainure.

Avantageusement, le matériau élastomère permet d'amortir le débattement de l'aube de l'amont vers l'aval lorsque le flux d'air provenant de la soufflante est redressé par l'aube.

L'invention concerne également un turboréacteur à double flux avec soufflante amont avec un ensemble d'aubes fixes formant redresseur de flux en aval du rotor de soufflante dont les aubes sont retenues à l'intérieur du carter de soufflante par le dispositif de l'invention.

De préférence, les aubes sont disposées entre le carter de soufflante et le carter de flux primaire, le pied des aubes étant engagé avec jeu dans des ouvertures ménagées dans ledit carter de flux primaire et un joint d'étanchéité comblant le dit jeu.

Avantageusement, le jeu est comblé à l'aide d'un joint d'étanchéité afin d'empêcher le flux d'air de s'engouffrer dans le carter de flux primaire.

De préférence, les aubes et le carter de flux primaire sont en matière métallique ou composite.

L'invention concerne également le procédé de montage des aubes de l'ensemble, selon lequel on engage l'aube par le pied dans ladite ouverture, on bascule l'aube de façon à engager le bord aval de la plateforme dans la rainure aval de la gorge circonférentielle, on fait pivoter l'aube autour de la rainure en ramenant l'aube vers l'amont jusqu'à ce que le bord amont de la plateforme vienne dans la gorge, et on solidarise la plateforme au carter avec les moyens de fixation.

Avantageusement, ce procédé de montage permet de monter des aubes entre le carter de soufflante et le carter de flux primaire en limitant les mouvements transversaux des aubes par rapport à l'axe du moteur et en favorisant les déplacement radiaux.

De préférence, on met en place au préalable le joint d'étanchéité autour de la pale à proximité du pied.

Avantageusement, il n'est pas nécessaire de basculer l'aube lors du montage pour insérer le joint d'étanchéité, l'aube étant insérée avec le joint préalablement enfilé sur la pale.

De préférence, on met en place une couche de matériau élastomère entre le bord aval de la plateforme et le fond de la rainure.

Avantageusement, la couche de matériau élastomère est placée avant l'insertion de l'aube pour amortir son débattement.

L'invention sera mieux comprise à l'aide de la description suivante en référence au dessin annexé sur lequel :
- la figure 1 représente une vue en coupe d'un turboréacteur avec des aubes de redresseur, en aval de soufflante, fixées par un dispositif de fixation de l'art antérieur ;
- La figure 2 représente une vue en perspective de l'aube maintenue dans un carter annulaire selon l'invention ;
- La figure 3 représente une vue en perspective de la fixation de la plateforme de l'aube dans un carter de soufflante selon l'invention;
- La figure 4 représente une vue en coupe de la fixation de l'aube dans le carter de soufflante selon l'invention; et
- La figure 5 représente une vue schématique du pied de l'aube engagé dans une ouverture du carter primaire selon la figure 2.

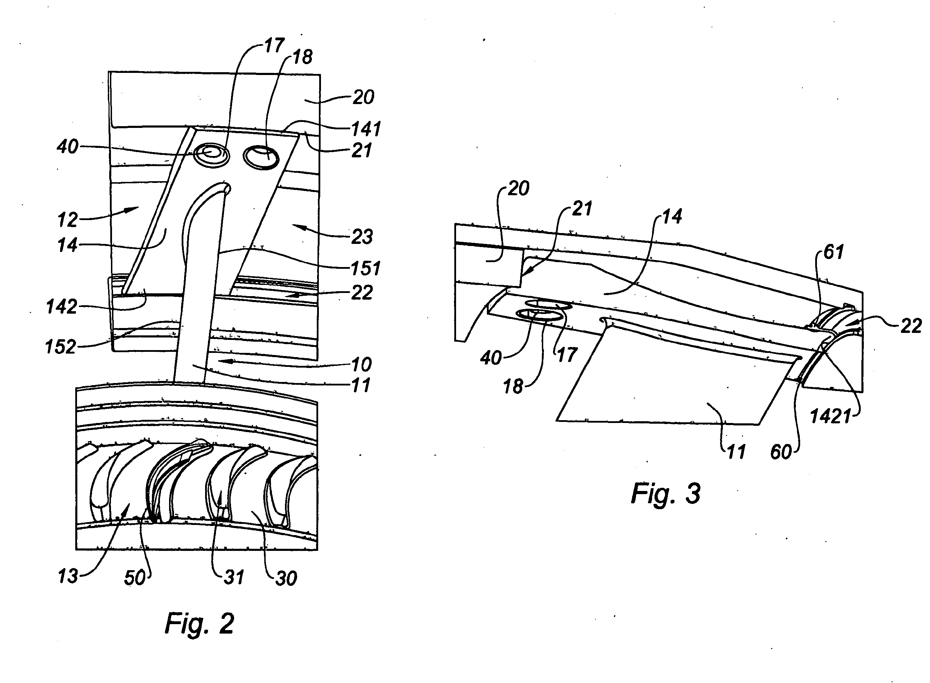

En référence à la figure 2, une aube fixe 10, ou aube de redresseur 10, est ici installée dans le canal de la veine secondaire d'un turboréacteur à double flux, en aval d'une soufflante, entre un carter de soufflante 20 et un carter de flux primaire 30. L'aube 10 comprend une tête 12 formée d'une plateforme 14 avec deux bords, un bord amont 141 et un bord aval 142, une pale 11 et un pied 13. Les aubes 10 et le carter de flux primaire 30 sont ici constitués de matière métallique, ils pourraient également être constitués de matière composite.

L'aube 10 est disposée radialement dans la veine, le pied 13 dirigé vers l'axe du moteur, la pale 11 comprenant un bord d'attaque 151 et un bord de fuite 152, la plateforme 14 étant sensiblement perpendiculaire à la pale 11.

La plateforme 14 est ici formée d'un bloc parallélépipédique dont l'épaisseur décroît entre le bord amont 141 et le bord aval 142, le bord amont 141 étant terminé à son extrémité amont par un décrochement 1411 ménagé sur la face de la plateforme en contact avec le carter 20, ce décrochement 1411 permettant de faciliter l'insertion de la plateforme 14 dans ledit carter 20. Le bord aval a une portion de forme arrondie 1421. La plateforme 14 est percée de deux ouvertures traversantes 17, 18 disposées au niveau d'une portion de plateforme entre le bord amont 141 et la pale 11. Les ouvertures 17, 18 sont chacune agencées pour recevoir un moyen de fixation 40.

Le carter de soufflante 20 comprend une gorge circonférentielle 23 ménagée dans sa paroi interne dans laquelle la plateforme 14 est insérée. La gorge 23 comprend un flanc amont 21 et un flanc aval 22. Le flanc aval 22 a une forme de rainure à section circulaire, d'ouverture axiale vers l'amont. L'aube 10 est retenue par engagement de sa plateforme 14 dans la gorge 23, le bord amont 141 contre le flanc amont 21 et le bord aval 142 contre le flanc aval 22 de la gorge 23. La portion arrondie 1421 du bord aval 142 coopère avec la rainure 22. Un jeu est ménagé entre le flanc amont 141 et le bord amont 21 afin de faciliter l'insertion de la plateforme 14 dans la gorge 23.

Une couche de matériau élastomère d'amortissement 60 est disposée entre le bord aval 142 de la plateforme 14 et le fond de ladite rainure 22. L'élastomère 60 permet de limiter le débattement de l'aube 10 lorsqu'il est soumis aux fluctuations du flux d'air provenant de la soufflante. La couche en matériau élastomère 60 comprend une languette de blocage 61 en saillie radiale coopérant avec un renfoncement 25 agencé dans la paroi interne de la gorge 23 à proximité de la rainure 22, la languette 61 maintenant la couche élastomère 60 dans le fond de la rainure 22.

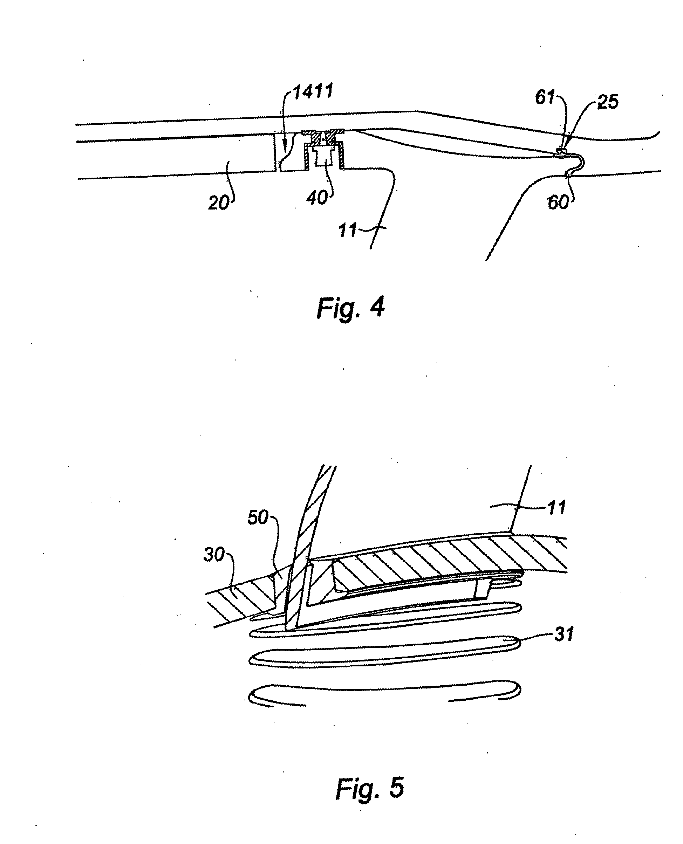

La plateforme 14 est retenue dans la gorge 23 au moyen de vis 40 traversant les ouvertures 17, 18, comme représenté sur la figure 3. En référence à la figure 4, deux vis 40 sont ici engagées au niveau du bord amont 141 pour maintenir la tête 12 de l'aube 10.

A l'autre extrémité de l'aube 10, le pied 13 est engagé avec un jeu dans une ouverture traversante 31 ménagée dans le carter de flux primaire 30, comme représenté sur la figure 5. Un joint d'étanchéité 50 de forme annulaire est enfilé sur la pale 11 au niveau du pied 13 rendant ainsi l'engagement de l'aube 10 dans le carter 30 imperméable à l'air.

Le montage des aubes fixes 10 peut ainsi être effectué par l'avant.

On insère tout d'abord le joint d'élastomère 60 dans la rainure aval 22 et on la bloque à l'aide de la languette de saillie radiale 61 dans le renfoncement 25 de la gorge 23. L'élastomère 60 est alors solidaire du fond de la rainure 22.

On enfile ensuite le joint d'étanchéité annulaire 50 sur la pale 11 par le pied 13 de l'aube 10 que l'on fait remonter plus haut que sa position finale afin de ne pas encombrer l'extrémité du pied 13 de l'aube 10.

On présente ensuite l'aube 10 inclinée, le pied 13 dirigé vers l'aval, avec le joint 50 remonté sur la pale 11, dans l'ouverture traversante 31 du carter de flux primaire 30. Le pied est enfoncé de l'amont vers l'aval plus loin que sa position finale dans ledit carter 30, afin de conserver un jeu pour redresser l'aube 10.

On redresse ensuite la tête 12 de l'aube 10 vers l'aval, le pied 13 étant guidé dans l'ouverture 31, la portion arrondie 1421 du bord aval étant insérée dans la rainure 22 de la gorge 23, la rainure 22 ayant été préalablement recouverte de la couche d'élastomère 60.

On fait pivoter ensuite l'aube 10 autour de la rainure 22 en ramenant l'aube 10 vers l'amont jusqu'à ce que le bord amont 141 de la plateforme 14 entre en contact avec le fond de la gorge 23, le jeu ménagé entre le flanc amont 21 et le bord amont 141 facilitant l'insertion de la plateforme 14 dans la gorge 23.

On fait ensuite coulisser le joint annulaire 50 le long de la pale 11, le joint 50 comblant le jeu entre l'aube 10 et l'ouverture 31. Le joint 50, ici en matière élastomère, peut-être compressé lors de son insertion, le joint 50 se détendant une fois disposé entre l'aube 10 et l'ouverture 30, rendant l'engagement de l'aube 10 dans le carter 20 hermétique à l'air.

Finalement, on solidarise la plateforme 14 au carter 20 en vissant les vis 40 au niveau du bord amont 141 de la plateforme 14 pour la maintenir dans la gorge 23. Le vissage est réalisé avec des outils de vissage, le bord amont 141 étant facilement accessible par l'amont du moteur.

D'une autre manière, avant de faire coulisser le joint 50 dans une position basse d'étanchéité, on peut également visser partiellement les vis 40 dans la plateforme 14 afin de conserver un jeu lors de la mise en place du joint d'étanchéité 50. Lorsque le joint 50 est disposé, on complète la fixation de la plateforme 14 dans la gorge 23, l'ensemble étant alors sécurisé.

En fonctionnement, l'air provenant de la soufflante est redressé dans l'axe du turboréacteur, le joint d'étanchéité 50 empêchant l'air de s'engouffrer dans le carter du flux primaire 30 et la couche d'élastomère 60 permettant d'amortir le débattement de l'aube 10.

Lorsqu'une aube 10 est endommagée, celle-ci peut-être facilement remplacée en effectuant les étapes de montage dans l'ordre inverse, l'élastomère 60 pouvant être remplacé facilement en cas d'usure.

Les procédés de montage et de démontage d'une aube 10 décrits conviennent bien pour des moteurs avec une forte densité linéaire d'aubes à la circonférence du carter 20. Ces procédés sont donc particulièrement adaptés pour les moteurs de petite taille dont les aubes 10 sont très proches les unes des autres.

## Revendications

1. Dispositif de fixation d'une aube fixe (10) de turbomachine dans un carter annulaire (20) de la turbomachine, l'aube (10) comprenant une tête (12) formée d'une plateforme (14) avec deux bords (141, 142), l'un formant un bord amont (141) et l'autre formant un bord aval (142), une pale (11) et un pied (13), le carter annulaire (20) comprenant une gorge circonférentielle (23) ménagée dans sa paroi interne avec un flanc amont (21) et un flanc aval (22), l'aube (10) étant retenue par engagement de la plateforme (14) dans la gorge (23), le bord amont (141) contre le flanc amont (21) et le bord aval (142) contre le flanc aval (22) de la gorge (23),le flanc aval (22) de la gorge (23) étant en forme de rainure (22) d'ouverture axiale vers l'amont, le bord aval (142) de la plateforme (23) étant engagé dans ledit flanc aval (22) et un moyen de fixation (40) étant rapporté pour maintenir la plateforme (14) dans la gorge (23) à l'amont, **caractérisé par le fait que** l'aube (10) comporte une portion de plateforme (14) entre la pale (11) et le bord amont (141) percée d'une ouverture traversante (17) agencée pour recevoir ledit moyen de fixation (40).

2. Dispositif selon la revendication 1 dont le moyen de fixation est constitué d'une vis (40).

3. Dispositif selon la revendication 1 dont le moyen de fixation est constitué de deux vis (40).

4. Dispositif selon l'une des revendications précédentes comprenant une couche en matériau élastomère (60) entre le bord aval (142) de la plateforme (14) et le fond de ladite rainure (22).

5. Turboréacteur à double flux avec soufflante amont comprenant un ensemble d'aubes fixes (10) formant redresseur de flux en aval du rotor de soufflante dont les aubes (10) sont retenues à l'intérieur du carter de soufflante (20) par un dispositif selon l'une des revendications précédentes.

6. Turboréacteur selon la revendication précédente dont les aubes (10) sont disposées entre le carter de soufflante (20) et le carter de flux primaire (30), le pied (13) des aubes (10) étant engagé avec jeu dans des ouvertures (31) ménagées dans ledit carter de flux primaire (30) et un joint d'étanchéité (50) comblant le dit jeu.

7. Turboréacteur selon l'une des revendications 5 et 6 dont les aubes (10) et le carter de flux primaire (30) sont en matière métallique ou composite.

8. Procédé de montage d'une aube fixe dans un turboréacteur selon l'une des revendications 5 à 7, selon lequel on engage l'aube (10) par le pied (13) dans ladite ouverture (31), on bascule l'aube (10) de façon à engager le bord aval (142) de la plateforme (14) dans la rainure aval (22) de la gorge circonférentielle (23), on fait pivoter l'aube (10) autour de la rainure (22) en ramenant l'aube (10) vers l'amont jusqu'à ce que le bord amont (141) de la plateforme (14) vienne dans la gorge (23), et on solidarise la plateforme (14) au carter (20) avec les moyens de fixation (40).

9. Procédé selon la revendication précédente selon lequel on met en place au préalable le joint d'étanchéité (50) autour de la pale (11) à proximité du pied (13).

10. Procédé selon l'une des revendications 8 et 9, selon lequel on met en place une couche de matériau élastomère (60) entre le bord aval (142) de la plateforme (14) et le fond de la rainure (22).

## Claims

1. A device for attaching a turbomachine stator vane (10) in an annular casing (20) of the turbomachine, the vane (10) comprising a tip (12) formed of a platform (14) with two edges (141,142), one of them forming an upstream edge (141) and the other forming a downstream edge (142), an airfoil (11) and a root (13), the annular casing (20) comprising a circumferential groove (23) formed in its interior wall with an upstream flank (21) and a downstream flank (22), the vane (10) being held by engagement of the platform (14) in the groove (23), the upstream edge (141) against the upstream flank (21) and the downstream edge (142) against the downstream flank (22) of the groove (23), the downstream flank (22) of the groove (23) being in the form of a slot (22) opening axially in the upstream direction, the downstream edge (142) of the platform (23) being engaged in said downstream flank (22) and a fastening means (40) being attached in order to hold the platform (14) in the groove (23) on the upstream side, wherein the vane (10) comprises a portion of platform (14) between the airfoil (11) and the upstream edge (141), this portion being pierced with a through-hole (17) designed to accept said fastening means (40).

2. The device as claimed in claim 1, the fastening means of which consists of a screw (40).

3. The device as claimed in claim 1, the fastening means of which consists of two screws (40).

4. The device as claimed in one of the preceding claims, comprising a layer of elastomeric material (60) between the downstream edge (142) of the platform (14) and the bottom of said slot (22).

5. A bypass turbojet engine with upstream fan comprising a set of stator vanes (10) which straighten the stream downstream of the fan rotor and the vanes (10) of which are held inside the fan casing (20) by a device as claimed in one of the preceding claims.

6. The turbojet engine as claimed in the preceding claim, the vanes (10) of which are positioned between the fan casing (20) and the main stream casing (30), the root (13) of the vanes (10) being engaged with clearance in openings formed in said main stream casing and a seal (50) being used to fill said clearance.

7. The turbojet engine as claimed in one of claims 5 and 6, in which the vanes (10) and the main stream casing (30) are made of a metal or of a composite.

8. A method of mounting a stator vane in a turbojet engine as claimed in one of claims 5 to 7, whereby the vane (10) is engaged via the root (13) in said opening (31), the vane (10) is tilted in such a way as to engage the downstream edge (142) of the platform (14) in the downstream slot (22) of the circumferential groove (23), the vane (10) is pivoted about the slot (22), returning the vane (10) upstream until the upstream edge (141) of the platform (14) enters the groove (23), and the platform (14) is secured to the casing (20) using the fastening means (40).

9. The method as claimed in the preceding claim, whereby the seal (50) is fitted around the airfoil (11) near the root (13) beforehand.

10. The method as claimed in one of claims 8 and 9, whereby a layer of elastomeric material (60) is positioned between the downstream edge (142) of the platform (14) and the bottom of the slot (22).

## Patentansprüche

1. Vorrichtung zur Befestigung einer Leitschaufel (10) eines Turbotriebwerks in einem ringförmigen Gehäuse (20) des Turbotriebwerks, wobei die Schaufel (10) einen Kopf (12), der aus einer Plattform (14) mit zwei Rändern (141, 142) gebildet wird, wobei der eine einen oberen Rand (141) und der andere einen unteren Rand (142) bildet, eine Schaufel (11) und eine Wurzel (13) umfasst, wobei das ringförmige Gehäuse (20) eine in seiner Innenwand eingerichtete Umfangsauskehlung (23) mit einer oberen Flanke (21) und einer unteren Flanke (22) umfasst, wobei die Schaufel (10) durch den Eingriff der Plattform (14) in die Auskehlung (23), den oberen Rand (141) an der oberen Flanke (21) und den unteren Rand (142) an der unteren Flanke (22) der Auskehlung (23) festgehalten wird, wobei die untere Flanke (22) der Auskehlung (23) in Form einer nach oben gerichteten Axialöffnungsrille (22) vorliegt, wobei der untere Rand (142) der Plattform (23) mit der unteren Flanke (22) in Eingriff steht und ein Befestigungsmittel (40) eingebracht wird, um die Plattform (14) in der oberhalb gelegenen Rille (23) zu halten, **dadurch gekennzeichnet, dass** die Schaufel (10) einen Plattformabschnitt (14) zwischen der Schaufel (11) und dem oberen Rand (141) umfasst, durch die eine durchgehende Öffnung (17) geht, die eingerichtet ist, um das Befestigungsmittel (40) aufzunehmen.

2. Vorrichtung nach Anspruch 1, wobei das Befestigungsmittel aus einer Schraube (40) besteht.

3. Vorrichtung nach Anspruch 1, wobei das Befestigungsmittel aus zwei Schrauben (40) besteht.

4. Vorrichtung nach einem der vorhergehenden Ansprüche, umfassend eine Schicht aus einem Elastomermaterial (60) zwischen dem unteren Rand (142) der Plattform (14) und dem Boden der Rille (22).

5. Zweisfrom-Strahltriebwerk mit oberem Gebläse, umfassend eine Anordnung von Leitschaufeln (10), die einen Stromrichter unterhalb des Gebläserotors bilden, dessen Schaufeln (10) im Innern des Gebläsegehäuses (20) durch eine Vorrichtung nach einem der vorhergehenden Ansprüche festgehalten werden.

6. Turboluftstrahltriebwerk nach dem vorhergehenden Anspruch, dessen Schaufeln (10) zwischen dem Gebläsegehäuse (20) und dem Primärstromgehäuse (30) angeordnet sind, wobei die Wurzel (13) der Schaufeln (10) mit Spielraum in Öffnungen (31) in Eingriff steht, die in dem Primärstromgehäuse (30) eingerichtet sind, und eine Dichtung (50) den Spielraum ausfüllt.

7. Turboluftstrahltriebwerk nach einem der Ansprüche 5 und 6, wobei die Schaufeln (10) und das Primärstromgehäuse (30) aus einem Metall- oder Verbundmaterial bestehen.

8. Verfahren zum Einbauen einer Leitschaufel in einem Turboluftstrahltriebwerk nach einem der Ansprüche 5 bis 7, wobei die Schaufel (10) mit der Wurzel (13) in die Öffnung (31) in Eingriff gebracht wird, die Schaufel (10) gekippt wird, um den unteren Rand (142) der Plattform (14) mit der unteren Rille (22) der Umfangsauskehlung (23) in Eingriff zu bringen, die Schaufel (10) um die Rille (22) herum verschwenkt wird, indem die Schaufel (10) nach oben zurückgeführt wird, bis der obere Rand (141) der Plattform (14) in die Auskehlung (23) gelangt, und die Plattform (14) mit dem Gehäuse (20) über die Befestigungsmittel (40) fest verbunden wird.

9. Verfahren nach dem vorhergehenden Anspruch, wobei zunächst die Dichtung (50) um die Schaufel (11) herum in der Nähe der Wurzel (13) eingesetzt wird.

10. Verfahren nach einem der Ansprüche 8 und 9, wobei eine Schicht aus Elastomermaterial (60) zwischen dem unteren Rand (142) der Plattform (14) und dem Boden der Rille (22) eingesetzt wird.
